# EUROPÄISCHE PATENTSCHRIFT

(11) **EP 0 803 409 B1**
(45) Veröffentlichungstag und Bekanntmachung des Hinweises auf die Patenterteilung: **28.08.2002**
(21) Anmeldenummer: 97106623.8
(22) Anmeldetag: 22.04.1997
(51) Int. Cl.: B60R 21/20

(54) **Beifahrer-Airbag-Modul**
Passenger air bag module
Module de coussin gonflable pour passager

(30) Priorität: 27.04.1996 DE 19616940
(43) Veröffentlichungstag der Anmeldung: 29.10.1997
(73) Patentinhaber: TRW Automotive Safety Systems GmbH & Co. KG, 63743 Aschaffenburg (DE)
(72) Erfinder: Bohn, Stefan, 63773 Goldbach (DE); Wissel, Willi, 63776 Mömbris (DE)
(74) Vertreter: Degwert, Hartmut, Dipl.-Phys.

(56) Entgegenhaltungen:
- EP-A- 0 620 139
- DE-A- 4 433 014
- US-A- 5 069 480
- US-A- 5 257 815
- US-A- 5 498 024
- US-A- 5 503 425

## Beschreibung

Die Erfindung betrifft ein Airbag-Modul für die Beifahrerseite eines Kraftfahrzeuges gemäß dem Oberbegriff der Ansprüche 1 und 2.

Airbag-Module für die Beifahrerseite in einem Kraftfahrzeug werden von der Automobilindustrie in zunehmendem Maße als Option oder gar als Serienausstattung angeboten. Andererseits werden große Anstrengungen unternommen, die Automobilherstellung zu rationalisieren, um international wettbewerbsfähig zu bleiben, d.h. die Mehrausstattung mit Beifahrer-Airbag muß mit geringstmöglichem Kostenaufwand realisiert werden.

Daraus resultiert die Aufgabe, einen Bauteilesatz der eingangs genannten Art hinsichtlich Materialaufwand, Herstellungs- und Montagekosten möglichst günstig zu konzipieren.

Ein gattungsgemäßes Airbag-Modul ist aus der EP-A-0 620 139 bekannt, das ein Gehäuse mit einer Abdeckung aufweist, so daß die restlichen Teile des Moduls im wesentlichen allseitig umschlossen sind.

Diese Aufgabe wird erfindungsgemäß durch ein Airbag-Modul der eingangs genannten Art mit den kennzeichnenden Merkmalen des Anspruchs 1 bzw. den kennzeichnenden Merkmalen des Anspruchs 2 gelöst.

Der Erfindung liegt die Erwägung zugrunde, daß man bei solchen Modulen auf ein allseitig geschlossenes Gehäuse verzichten kann und daß der Druckgasbehälter als formstabiles Bauteil im wesentlich höheren Maße als bisher in die Gestaltung eines Airbag-Moduls für die Beifahrerseite einbezogen werden kann.

Zur Unterbringung und Halterung des zusammengefalteten Luftsacks werden nur ein den Druckgasbehälter umgebendes Rohr und zwei Seitenteile benötigt, die zusammen mit dem Druckgasbehälter zu einer Baueinheit zusammenspannbar sind. Diese Baueinheit bedarf keiner Längswände, weil der Luftsack in zusammengefaltetem Zustand ausreichend formstabil ist. Zum Schutz des Luftsackes beim Transport und beim Einbau des Airbag-Moduls kann man einen umhüllenden Schutzüberzug vorsehen, der aber keinesfalls immer erforderlich ist und lediglich eine zweckmäßige Weiterbildung des Erfindungsgedankens darstellt.

Außer dem Druckgasbehälter und dem Luftsack sind demnach für das erfindungsgemäße Airbag-Modul nur ein Rohr und zwei Seitenteile erforderlich, wobei der Druckgasbehälter als Spannmittel mitbenutzt wird.

Die Seitenteile bestehen aus einfachen, gestanzten und verformten Blechabschnitten, die leicht an beliebige Vorgaben anpaßbar sind, konkret weisen die Seitenteile napfartig nach innen ausgeformte, kreisrunde Bereiche auf, mit denen sie formschlüssig in das Rohr eingreifen können. Zusammen mit der Stirnseite des Rohres und den sich außerhalb der napfartigen Bereiche in der Ursprungsebene erstreckenden Bereichen der Blechabschnitte wird so eine sichere und formstabile Zuordnung zwischen Rohr und Seitenteilen erreicht. Außerdem weisen Druckgasbehälter, Rohr und Seitenteile zweckmäßigerweise Elemente für eine winkelgetreue Ausrichtung aus, so daß mit einem einzigen Spannmittel unter Einbezug des Druckgasbehälters eine formstabile Baueinheit herstellbar ist.

Vorteilhafte Abwandlungen und Ausgestaltungen des Erfindungsgedankens sind in den Unteransprüchen 3 bis 9 beschrieben. Weitere Einzelheiten werden anhand des in den Figuren 1 bis 5 dargestellten Ausführungsbeispiels näher erläutert. Es zeigen:
- Fig.1: einen Druckgasbehälter in perspektivischer Darstellung,
- Fig.2: ein zugehöriges Verteilerrohr,
- Fig.3: zwei über ein Hilfsrohr miteinander verbundene Seitenteile,
- Fig.4: eine aus den Bauteilen der Figuren 1 bis 3 zusammengesetzte Baugruppe und
- Fig.5: einen Querschnitt durch ein Airbag-Modul ohne Druckgasbehälter.

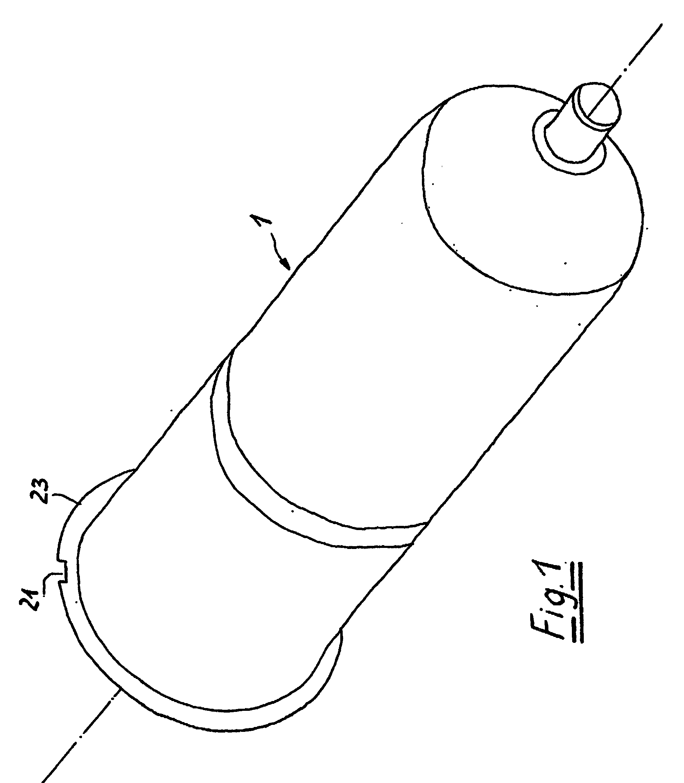

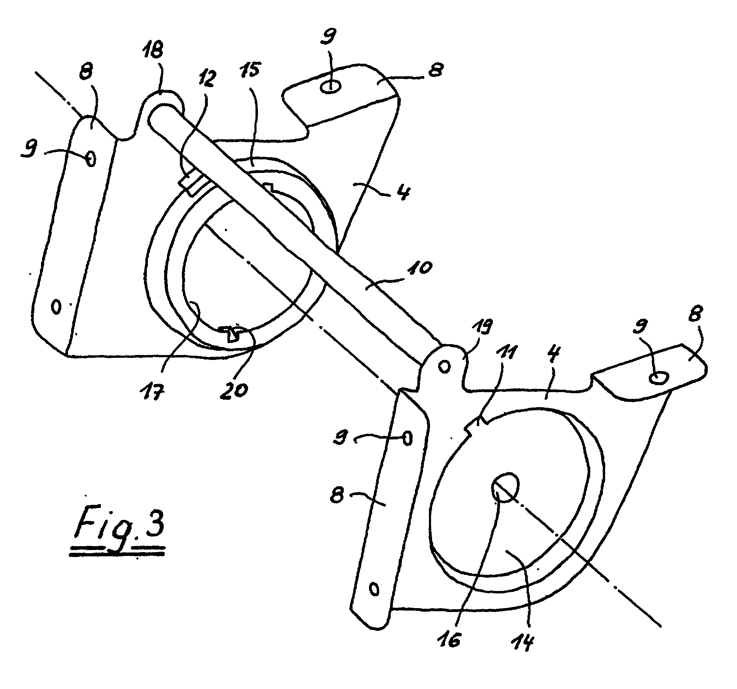

Der Druckgasbehälter 1 gemäß Fig. 1 ist kopfseitig mit einem Gewindestutzen 22 versehen und hat fußseitig einen vorstehenden Flansch 23 mit einer schmalen Abkantung 21, die zum Eingriff in eine Ausnehmung 20 eines Seitenteils 4 (Fig. 3) bestimmt ist und der winkelgetreuen Ausrichtung von Druckgasbehälter 1 und Seitenteil 4 dient.

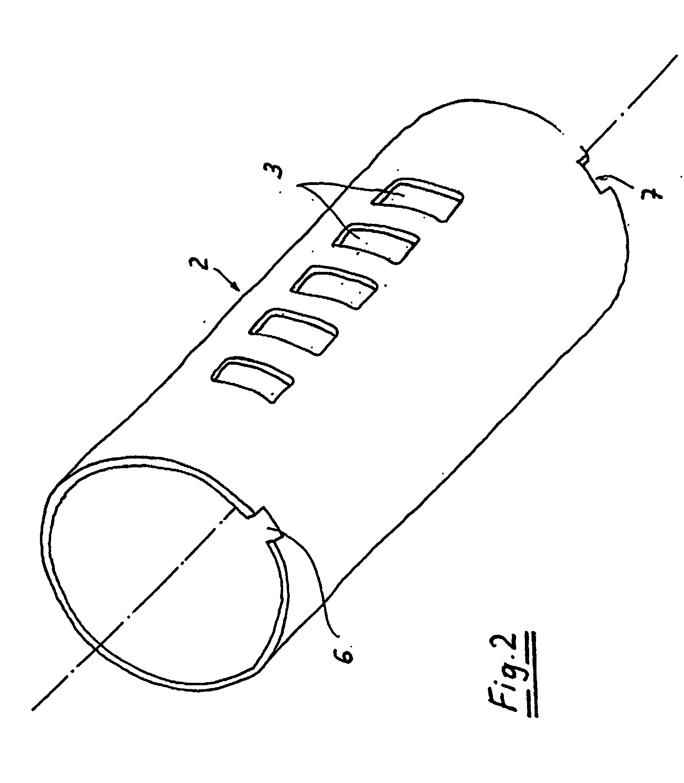

In Fig. 2 ist ein Rohr 2 dargestellt, das den Druckgasbehälter 1 aufnimmt und in Längsrichtung verteilt Austrittsöffnungen 3 für das bei einer Aktivierung des Luftsacks schlagartig freigesetzte Druckgas aufweist, damit der Gasstrom etwas gedrosselt und der Luftsack über seinen gesamten Eintrittsquerschnitt gleichmäßig beaufschlagt wird. Das Rohr 2 weist endseitig je eine Ausnehmung 6, 7 auf, die im Zusammenwirken mit radial nach außen vorspringenden Ausformungen 11, 12 in den napfförmigen Bereichen 14, 15 der Seitenteile 4 (Fig. 3) für deren winkelgetreue Ausrichtung zum Rohr 1 sorgen.

Fig. 3 zeigt zwei mittels eines Hilfsrohres 10 (oder einer Hilfsstange) verbundene Seitenteile 4 aus Blechabschnitten, die durch Stanzen und Umformen eine geeignete Form erhalten haben. Mit einem Umformschnitt sind napfartig nach innen, d.h. in Richtung auf das aufzunehmende Rohr 1 ausgeformte, kreisrunde Bereiche 14, 15 gebildet worden, mit denen die Seitenteile 4 in das Rohr 1 eingreifen können und eine radial formschlüssige Anordnung ergeben. Diese Bereiche 14, 15 weisen außerdem radial nach außen vorspringende Ausformungen 11 und 12 auf, mit denen die Seitenteile 4 in endseitige Ausnehmungen 6 und 7 des Rohres 1, (Fig. 2) eingreifen können und die winkelgetreue Anordnung ergeben. Ferner sind in den Seitenteilen Ausnehmungen 16 und 17 vorgesehen, deren Durchmesser auf den Druckgasbehälter 1 bzw. auf dessen Gewindestutzen 22 (Fig. 1) abgestimmt sind. Die Ausnehmung 20 dient - wie schon erwähnt - zusammen mit einer Abkantung 21 im Flansch 22 des Druckgasbehälters 1 (Fig. 1) der winkelgetreuen Ausrichtung zwischen Druckgasbehälter 1 und Seitenteile 4.

An den Seitenteilen 4 sind außerdem noch Abkantungen 8 und Bohrungen 9 für die Befestigung des Airbag-Moduls im Fahrzeug vorgesehen. Außerdem haben die Seitenteile 4 noch Fortsätze 18 und 19, die der Befestigung eines Hilfsrohres 10 dienen. Letzteres wird für die Anbindung einer Abdeckkappe (nicht dargestellt) für das Airbag-Modul und ggf. zur Ergänzung der über den Druckgasbehälter 1 erfolgenden Verspannung der Bauteile untereinander benötigt.

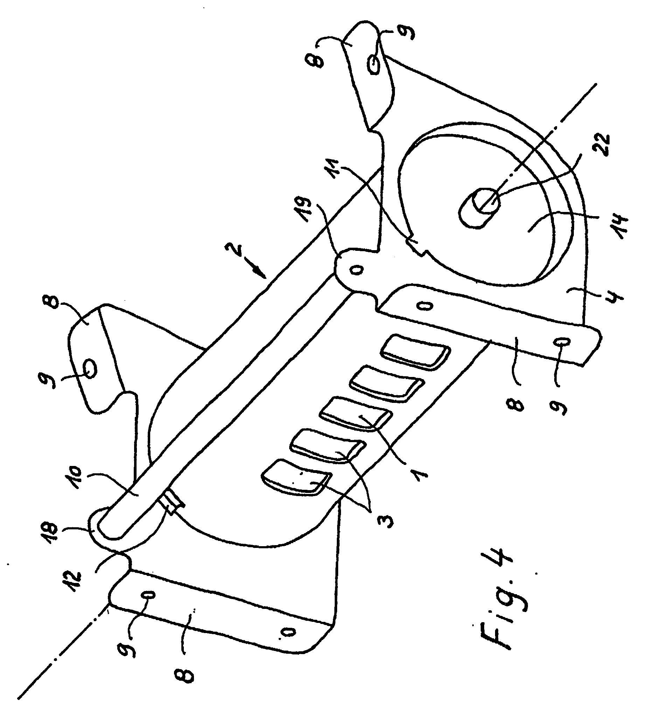

Fig. 4 zeigt die in den Figuren 1 bis 3 dargestellten Bauteile als zusammengesetzte Baugruppe ohne eine auf den Gewindestutzen 22 aufgesetzte Spannmutter. Die Darstellung ist aus sich heraus verständlich und bedarf keiner weiteren Erläuterungen.

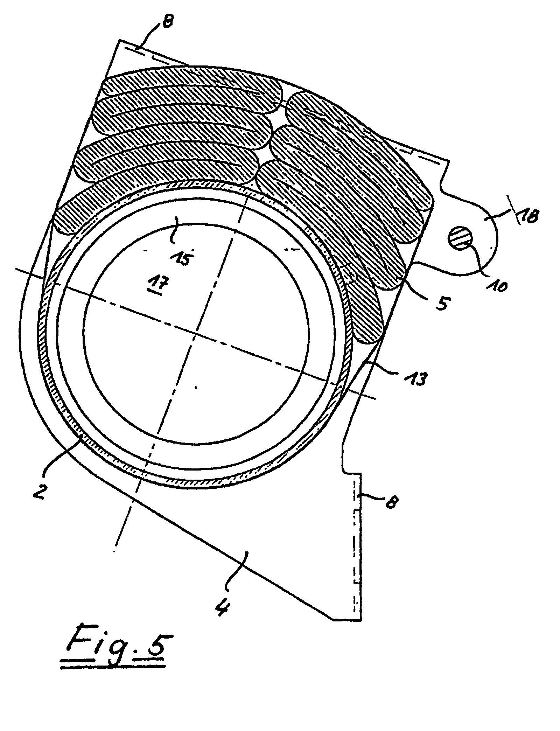

Fig. 5 schließlich zeigt einen Querschnitt durch die Baugruppe gemäß Fig. 4, ohne den Druckgasbehälter 1, jedoch mit einem zusammengefalteten Luftsack 5 und einem Schutzüberzug 13. Letzterer ist nicht erforderlich, wenn der zusammengefaltete Luftsack 5 eine eigenstabile Form aufweist, die über punktförmige Klebestellen, die im Ernstfall ein Entfalten des Luftsacks 5 nicht behindern, leicht erreicht werden kann. Man sieht ein Seitenteil 4 in der Draufsicht und einen Fortsatz 18 für die Befestigung einer Hilfsstange 10 (oder eines Hilfsrohres) für die gelenkige Anbindung einer Abdeckkappe. Ferner erkennt man den napfartig ausgeformten Bereich 15 und die darin vorgesehene Ausnehmung 17, die im Durchmesser auf den Druckgasbehälter 1 (hier nicht dargestellt) abgestimmt ist, sowie die Abkantungen 8.

Das erfindungsgemäße Airbag-Modul kommt mit wenigen, sehr einfach herzustellenden Bauteilen aus. Es ist preisgünstig herstellbar und leicht zu montieren, wobei die Abkantungen 8 und die Bohrungen 9 ohne weiteres an unterschiedliche Einbauverhältnisse anpaßbar sind. Zur Verbindung der Seitenteile 4 mit dem Rohr 2 wird der Druckgasbehälter 1 als ein auf Zug beanspruchtes Spannmittel benutzt, bei dem eine Schraube genügt, sämtliche Bauteile, mit Ausnahme des Luftsacks 5, zu einer Baugruppe zusammenzufassen. Der Luftsack 5 selbst ist in an sich bekannter Weise mittels spannbandartiger Mittel auf dem Rohr 2 befestigt.

Gemäß einer alternativen Ausführungsform ist der Luftsack 5 durch geeignetes Einklemmen zwischen dem Rohr 2 und den Seitenteilen 4 befestigt.

## Patentansprüche

1. Airbag-Modul für die Beifahrerseite eines Kraftfahrzeuges, mit einem zylindrischen Druckgasbehälter (1), einem den Druckgasbehälter (1) umhüllenden Rohr (2) mit in Längsrichtung verteilt angeordneten Austrittsöffnungen (3), zwei aus Blech geformten Seitenteilen (4), die zusammen mit dem Rohr (2) mittels des Druckgasbehälters (1) zusammenspannbar sind, und einem Luftsack (5), der einen das Rohr (2) zumindest in Teilbereichen umschließenden Abschnitt aufweist und über dem Rohr (2) zusammengefaltet angeordnet ist, **dadurch gekennzeichnet, daß** der Luftsack (5) auf dem Rohr (2) mittels spannbandartiger Mittel befestigt ist und die Seitenteile (4) napfartig nach innen ausgeformte, kreisrunde Bereiche (14, 15) aufweisen, mit denen sie formschlüssig in das Rohr (2) eingreifen.

2. Airbag-Modul für die Beifahrerseite eines Kraftfahrzeuges, mit einem zylindrischen Druckgasbehälter (1), einem den Druckgasbehälter (1) umhüllenden Rohr (2) mit in Längsrichtung verteilt angeordneten Austrittsöünungen (3), zwei aus Blech geformten Seitenteilen (4), die zusammen mit dem Rohr (2) mittels des Druckgasbehälters (1) zusammenspannbar sind, und einem Luftsack (5), der einen das Rohr (2) zumindest in Teilbereichen umschließenden Abschnitt aufweist und über dem Rohr (2) zusammengefaltet angeordnet ist, **dadurch gekennzeichnet, daß** der Luftsack (5) durch Einklemmen zwischen Rohr (2) und Seitenteilen (4) befestigt ist.

3. Airbag-Modul nach Anspruch 2, **dadurch gekennzeichnet, daß** die Seitenteile (4) napfartig nach innen ausgeformte, kreisrunde Bereiche (14, 15) aufweisen, mit denen sie formschlüssig in das Rohr (2) eingreifen.

4. Airbag-Modul nach Anspruch 1 oder 3, **dadurch gekennzeichnet, daß** die napfartigen Bereiche (14, 15) Ausnehmungen (16, 17) zur Festlegung des Druckgasbehälters (1) aufweisen.

5. Airbag-Modul nach Anspruch 1, 3 oder 4, **dadurch gekennzeichnet, daß** die Seitenteile (4) einen oder mehrere über die kreisförmigen Bereiche (14, 15) radial nach außen vorspringende Ausformungen (11, 12) aufweisen, mit denen sie in entsprechende Ausnehmungen (6, 7) des Rohres (2) eingreifen können, um eine winkelgetreue Ausrichtung zwischen Rohr (2) und Seitenteilen (4) zu erreichen.

6. Airbag-Modul nach einem der Ansprüche 1, 3 bis 5, **dadurch gekennzeichnet, daß** zumindest eines der Seitenteile (4) im napfartig nach innen aasgeformten Bereich (14, 15) eine Ausnehmung (20) oder dgl. aufweist, die mit einer korrespondierenden Abkantung (21) oder dgl. am Druckgasbehälter (1) eine winkelgetreue Ausrichtung zwischen Druckgasbehälter (1) und Seitenteil (4) ermöglicht.

7. Airbag-Modul nach einem der Ansprüche 1 bis 6, **dadurch gekennzeichnet, daß** die Seitenteile (4) zur Befestigung des Airbag-Moduls im Instrumentenbrett bzw. in der Karosserie des Kraftfahrzeuges mit Abkantungen (8), Bohrungen (9) und dgl. ausgestattet sind.

8. Airbag-Modul nach Anspruch 7, **dadurch gekennzeichnet, daß** die Seitenteile (4) außerdem zur Befestigung eines oberhalb des zusammengefalteten Luftsacks (5) achsparallel zu dem Rohr (2) anzubringenden Hilfsrohres (10) oder einer Hilfsstange ausgebildet sind, an dem bzw. an der eine Abdeckkappe für das Airbag-Modul mittels Fangband oder dgl. befestigt werden kann.

9. Airbag-Modul nach einem der Ansprüche 1 bis 8, **dadurch gekennzeichnet, daß** es mit einem Schutzüberzug (13) umhüllt ist.

## Claims

1. An airbag module for the front passenger side of a motor vehicle, comprising a cylindrical compressed gas container (1), a tube (2) enclosing the compressed gas container (1) and having outlet openings (3) arranged distributed in the longitudinal direction, two lateral components (4) formed of sheet metal which can be clamped together along with the tube (2) by means of the compressed gas container (1), and an airbag (5) having a section which encompasses at least partial areas of the tube (2) and being arranged folded over the tube (2), **characterized in that** the airbag (5) is secured on the tube (2) by means of clamping strip-like means and the lateral components (4) have circular, cup-like areas (14, 15) shaped to protrude inwards, by which they engage into the tube (2) with an interlocking fit.

2. An airbag module for the front passenger side of a motor vehicle, comprising a cylindrical compressed gas container (1), a tube (2) enclosing the compressed gas container (1) and having outlet openings (3) arranged distributed in the longitudinal direction, two lateral components (4) formed of sheet metal which can be clamped together along with the tube (2) by means of the compressed gas container (1), and an airbag (5) having a section which encompasses at least partial areas of the tube (2) and being arranged folded over the tube (2), **characterized in that** the airbag (5) is secured by being clamped between the tube (2) and the lateral components (4).

3. The airbag module according to claim 2, **characterized in that** the lateral components (4) have circular, cup-like areas (14, 15) shaped to protrude inwards, by which they engage into the tube (2) with an interlocking fit.

4. The airbag module according to claim 1 or 3, **characterized in that** the cup-shaped areas (14, 15) have cutouts (16, 17) for fixing the compressed gas container (1) in place.

5. The airbag module according to claim 1, 3 or 4, **characterized in that** the lateral components (4) have one or more shaped portions (11, 12) which project radially outwards beyond the circular areas (14, 15), allowing them to engage into matching recesses (6, 7) in the tube (2) so as to achieve a correct angular orientation between the tube (2) and the lateral components (4).

6. The airbag module according to any of claims 1, 3 to 5, **characterized in that** at least one of the lateral components (4) has a cutout (20) or the like in the cup-shaped, inwardly protruding area (14, 15) which, together with a matching bevel (21) or the like on the compressed gas container (1), allows a correct angular orientation between the compressed gas container (1) and the lateral component (4).

7. The airbag module according to any of claims 1 to 6, **characterized in that** the lateral components (4) are provided with bevels (8), bores (9) and the like for securing the airbag module in the instrument panel or in the body of the motor vehicle.

8. The airbag module according to claim 7, **characterized in that** the lateral components (4) are further configured to secure an auxiliary tube (10) or an auxiliary rod which is to be mounted above the folded airbag (5) and axially paralleling the tube (2) and to which a cover cap for the airbag module can be secured by means of a tether or the like.

9. The airbag module according to any of claims 1 to 8, **characterized in that** it is enclosed in a protective cover (13).

## Revendications

1. Module de coussin à gaz pour le côté passager d'un véhicule, comprenant un récipient de gaz comprimé (1), un tube (2) enveloppant le récipient de gaz comprimé (1) avec des orifices de sortie (3) agencés de manière répartie en direction longitudinale, deux parties latérales (4) formées en tôle qui peuvent être serrées conjointement avec le tube (2) au moyen du récipient de gaz comprimé (1), et un coussin à gaz (5) qui présente un tronçon entourant le tube (2) au moins dans des régions partielles et qui est agencé replié au-dessus du tube (2), **caractérisé en ce que** le coussin à gaz (5) est fixé sur le tube (2) par des moyens du type bande de serrage et **en ce que** les parties latérales (4) présentent des zones (14, 15) circulaires en forme de cuvettes embouties vers l'intérieur, par lesquelles elles s'engagent dans le tube (2) par formes complémentaires.

2. Module de coussin à gaz pour le côté passager d'un véhicule, comprenant un récipient de gaz comprimé (1), un tube (2) enveloppant le récipient de gaz comprimé (1) avec des orifices de sortie (3) agencés de manière répartie en direction longitudinale, deux parties latérales (4) formées en tôle qui peuvent être serrées conjointement avec le tube (2) au moyen du récipient de gaz comprimé (1), et un coussin à gaz (5) qui présente un tronçon entourant le tube (2) au moins dans des régions partielles et qui est agencé replié au-dessus du tube (2), **caractérisé en ce que** le coussin à gaz (5) est fixé par serrage entre le tube (2) et les parties latérales (4).

3. Module de coussin à gaz selon la revendication 2, **caractérisé en ce que** les parties latérales (4) présentent des zones (14, 15) circulaires en forme de cuvettes embouties vers l'intérieur, avec lesquelles elles s'engagent dans le tube (2) par formes complémtentaires.

4. Module de coussin à gaz selon la revendication 1 ou 3, **caractérisé en ce que** les zones (14, 15) en forme de cuvettes présentent des évidements (16, 17) pour fixer le récipient de gaz comprimé (1).

5. Module de coussin à gaz selon les revendications 1, 3 ou 4, **caractérisé en ce que** les parties latérales (4) présentent une ou plusieurs protubérances (11, 12) faisant radialement saillie vers l'extérieur, avec lesquelles elles peuvent s'engager dans des évidements (6, 7) correspondants du tube (2) pour obtenir une orientation angulaire conforme entre le tube (2) et les parties latérales (4).

6. Module de coussin à gaz selon l'une des revendications 1 à 5, **caractérisé en ce qu'**au moins une des parties latérales (4) présente dans la zone (14, 15) en forme de cuvette emboutie vers l'intérieur un évidement (20) ou similaire qui, avec un chanfrein (21) correspondant ou similaire sur le récipient de gaz comprimé (1), permet une orientation angulaire conforme entre le récipient de gaz comprimé (1) et la partie latérale (4).

7. Module de coussin à gaz selon l'une des revendications 1 à 6, **caractérisé en ce que** les parties latérales (4) sont pourvues de chanfreins (8), perçages (9) et similaires pour fixer le module de coussin à gaz dans le tableau de bord ou dans la carrosserie d'un véhicule, respectivement.

8. Module de coussin à gaz selon la revendication 7, **caractérisé en ce que** les parties latérales (4) sont en outre réalisées pour fixer un tube auxiliaire (10) ou une tige auxiliaire, à monter au-dessus du coussin à gaz replié (4) parallèlement à l'axe du tube (2), sur lequel ou laquelle on peut fixer un couvercle pour le module de coussin à gaz au moyen d'une bande de garde ou similaire.

9. Module de coussin à gaz selon l'une des revendications 1 à 8, **caractérisé en ce qu'**il est enveloppé d'un revêtement de protection (13).
